# EUROPEAN PATENT APPLICATION

(11) **EP 4 624 888 A1**
(43) Date of publication of application: **01.10.2025**
(21) Application number: 25382203.5
(22) Date of filing: 06.03.2025
(51) Int. Cl.: G01L 19/08, G01L 19/12, G01M 3/32, H02B 13/065

(54) **SYSTEM FOR MONITORING THE FILLING PRESSURE OF A FLUID USED IN MEDIUM AND HIGH VOLTAGE ELECTRICAL EQUIPMENT**

(30) Priority: 06.03.2024 ES 202430433 U
(71) Applicant: Ormazabal Corporate Technology, A.I.E., 48340 Amorebieta-Etxano (Vizcaya) (ES)
(72) Inventor: HURTADO VICUÑA, Aritz, 48340 AMOREBIETA-ETXANO (Vizcaya) (ES); PIÑA FELIPE, Iñaki, 48340 AMOREBIETA-ETXANO (Vizcaya) (ES); GILBERT, Ian Paul, 48340 AMOREBIETA-ETXANO (Vizcaya) (ES); BARRUTIA INZA, Iban, 20500 MONDRAGÓN ( Guipuzcoa) (ES); MENDICUTE ERRASTI, Mike, 20500 MONDRAGÓN ( Guipuzcoa) (ES)
(74) Representative: Herrero & Asociados, S.L.

(57) **Abstract**

The system (1) for monitoring the filling pressure of a fluid (2) in medium and high voltage electrical switchgear (3) allows continuous and remote control of the gas pressure throughout the useful life of the electrical switchgear, reducing the physical footprint of the sensors and communications electronics within the switchgear (3). It has energy-efficient and high-precision sensors, complying with international regulations and requirements of power grid operators. It comprises a measuring unit (5) with a pressure sensor (7) and a temperature sensor (8) integrated in a housing (14), and a processing unit (6), communicating wirelessly and bidirectionally through data transmission (15) and reception (16) means. The processing unit (6) can be installed separately from the switchgear (3) and the measuring unit (5) incorporates a battery (9) whose charge is monitored.

## Description

### OBJECT OF THE INVENTION

The invention relates to a system for monitoring the filling pressure of a fluid for being used in medium and high voltage electrical power distribution switchgear, such as in gas-insulated switchgear. The system allows continuous and remote monitoring of the gas filling pressure throughout the useful life of the electrical switchgear, reducing the physical footprint of the pressure and temperature sensors, as well as the communications electronics within the electrical switchgear. These sensors are energy efficient and have a high measurement precision, always complying with the requirements of international regulations and of the power grid operators.

### BACKGROUND OF THE INVENTION

Climate change is currently one of the main challenges that society is facing. Planet Earth is overheating. According to NASA data, the average temperature in 2020 was 1.02 °C higher than in the period 1950-1980. Scientists agree that anthropogenic emissions of greenhouse gases into the atmosphere, particularly since the Industrial Revolution, are responsible for this change. One of these gases, sulphur hexafluoride (SF₆), widely used in medium and high voltage electrical power distribution switchgear for many years, is an agent that intensifies the greenhouse effect, having a global warming potential and a very long lifetime in the atmosphere. One of the tools that have been established to reduce this damage is the future prohibition of the use of sulphur hexafluoride (SF₆) in electrical distribution switchgear, that is, replacing sulphur hexafluoride (SF₆) used until now in electrical switchgear as an insulation medium or means of interrupting the electric arc with another insulation medium or means of interrupting the electric arc that does not contribute to the greenhouse effect or that makes a very small contribution.

Insulation media or electric arc interrupting media alternative to sulfur hexafluoride (SF₆) have a lower dielectric strength than the latter, and therefore, to obtain the same results as with sulfur hexafluoride (SF₆), other variables that comprise the electrical switchgear are used, such as the dimensions of the switchgear itself or the filling pressure of certain compartments of said switchgear. At atmospheric pressure, SF₆ has a dielectric strength 2.5 times better than that of air, for example. SF₆ is usually used at 3 to 5 times atmospheric pressure, in which case the dielectric strength can reach up to 10 times the dielectric strength of the air. Air has a modest dielectric strength, of the order of 32 kVpeak/cm at normal pressure (1 bar), of around 160 kV/cm at 10 bar and approximately 500 kV/cm at 30 bar. Therefore, with alternative gases to SF₆, the filling pressure of the airtight compartments of the electrical switchgear is usually adjusted in order to achieve the desired dielectric strength, which means increasing the gas filling pressure in the airtight compartments of the electrical switchgear.

As mentioned above, the dimensions of the electrical switchgear also influence the dielectric strength, since the greater the separation between conductive parts, the greater the dielectric strength. This means that the greater the separation between conductive parts and therefore the greater the dielectric strength, on the other hand, the larger the dimensions of the electrical switchgear will be, which can cause space problems in electrical installations.

Therefore, in order to maintain the same dimensions of the electrical switchgear as with the use of SF₆ or to reduce them, it is usually considered to increase the pressure in the airtight compartments of the electrical switchgear, maintaining the same distances between conductive parts or reducing them as much as possible. This implies the need to measure certain magnitudes inside the airtight compartments of the electrical switchgear, such as pressure and temperature. On the other hand, if it is currently necessary to measure the pressure of SF₆ gas in the airtight compartments in order to detect, for example, overpressures or gas leaks, it is neddless to say so in the case of using alternative gases to SF₆, with which the filling pressure of the airtight compartments is higher.

Currently, electrical switchgear includes pressure gauges in the airtight compartments, such as standard pressure gauges, where it is advisable to check that the gas pressure is adequate before carrying out any type of operation (with the switch or switch/disconnector) under voltage and to avoid the risk of fires and explosions due to incorrect interrupting of the electric arc (when opening the contacts of the switch or switch/disconnector) inside the airtight compartment. The explosion of the airtight compartment subjected to gas pressure can cause material damage, as well as serious personal injury to the operators who have operated the electrical switchgear. Likewise, due to an undue gas pressure inside the airtight compartments of the electrical switchgear, an electric arc may arise between conductive parts or an internal defect that can also be the cause of an explosion, since said internal defect or generated electric arc causes an overpressure inside the airtight compartment.

It is clear that in the electrical power distribution sector, monitoring of the filling pressure is necessary throughout the useful life of the electrical switchgear, regardless of the insulation medium or arc-interrupting medium used, minimizing the physical footprint of the electrical switchgear and complying with the requirements of international regulations and power grid operators.

Thus, as an example of the state of the art, we can cite patent application US2011153232A1, which deals with a pressure monitoring system in gas-insulated electrical switchgear, as well as the method of calculating the equivalent pressure with high precision, using pressure and temperature measurements that are measured in time series during a period of small variation or a determined period. For example, in a 24h sampling interval, a characteristic curve slope or an equivalent pressure is calculated through a mathematical expression using pressure measurements and small temperature variations obtained during 24h or a predetermined period. In this sense, if the slope or equivalent pressure tend to decrease day by day, the existence of a gas leak in the electrical switchgear is confirmed. For this purpose, the monitoring system consists of a pressure sensor that measures the pressure inside an airtight container, two temperature sensors (one internal and one external to the airtight container), a memory device where the measurements are stored in time intervals, a calculation unit where the equivalent pressure is obtained by following a method, and a monitor where the results are displayed.

This example of the state of the art includes the drawback relating to the space occupied by the monitoring system in the electrical switchgear, since it is equipped with several elements, such as pressure and temperature sensors, memory device, calculation unit and monitor, which are installed in the electrical switchgear separately from each other, which entails an increase in the dimensions of the electrical switchgear. In addition, no reference is made to the location of the calculation unit, so it is assumed that it is located in the same electrical switchgear, so the interconnection between the aforementioned elements is by cable, which entails the need to carry out additional wiring in the same electrical switchgear from the memory device to said calculation unit for the monitoring system.

Likewise, we can cite patent DE19747826B4, which deals with a system for monitoring the pressure of gas, in this case air. The patent simply indicates that there is a pressure sensor for each compartment of the electrical switchgear and that these sensors are associated with several control or processing units (of the measurements obtained by the sensors) arranged in the same electrical switchgear in the low voltage compartment. Each of these sensors is interconnected with its corresponding processing unit by means of wiring. The aim of this state-of-the-art example is to be able to select the type of protection against an electrical fault by means of selectivity in the measurement of pressure by compartments of the electrical switchgear. In this way, the switch of the same medium voltage electrical switchgear or another switch that is upstream of said electrical switchgear can be made to operate. As in the previous state-of-the-art example, in this case there is also the problem of space, since there is a pressure sensor for each compartment and several processing units in the low voltage compartment, which increases the dimensions of the electrical switchgear. In addition, the interconnection between the pressure sensors and the processing units is carried out by means of wiring.

US2021018390A1 relates to a pressure monitoring system for being used in extreme high temperature environments, where the pressure measurement can be easily affected and may cause signal distortion in the transmission process. The system consists of a pressure sensor that includes a pressure sensor chip and a pressure signal processing module. Likewise, it relates to a method of obtaining pressure. The pressure sensor chip and the processing module are both integrated in a single casing or body, since, as occurs in the technical field of electrical power distribution, specifically in installations equipped with electrical switchgear, dimensions play an important role in order to achieve increasingly compact equipment and thus avoid space problems in the installations. The monitoring system of this US application comprises conductors or cables for communication with other devices, such as display instruments, which implies having these other devices in the same installation or close to them, as well as other disadvantages that a wired communication network implies, such as: the need to install cables through walls and ceilings and being limited to fixed connections that prevent free mobility, less flexibility, adaptability and efficiency in communications that mean the impossibility of being able to access information from any place and at any time, etc. Furthermore, wired communication involves high costs due to the need to install physical cables and other expenses associated with the installation and maintenance of wired infrastructures.

To cite another example of the state of the art, ES1305807U deals with a pressure measuring device for direct connection to a standard pressure gauge, intended to be fixed in a solid manner to the axis of the needle of the standard pressure gauge, and which allows the acquisition and sending of measured pressure data to external devices. In particular, the device comprises an electronic module, which in turn comprises a pressure data collection sensor. This sensor is intended to be attached to the needle shaft of a standard pressure gauge, so that it records the pressure measured by the standard pressure gauge and indicated by the needle. That is, the pressure data collection sensor is configured to detect the pressure measurement indicated at any given time by the needle of the standard pressure gauge, based on the rotation of the shaft. In a preferred embodiment of the invention, the pressure data collection sensor is a hollow shaft variable resistor (potentiometer) embedded in an electronic module. This example of the state of the art includes the drawback that it is necessary to adapt the standard pressure gauge, since the device object of the invention must be fixed to the axis of the needle of said standard pressure gauge. Therefore, in the event of installing the device subject matter of ES1305807U in an electrical switchgear already installed in the field and in operation, it is necessary to first uninstall the standard pressure gauge from the electrical switchgear and adapt it in such a way that the pressure data collection sensor is incorporated, linking said sensor to the needle axis of the standard pressure gauge. This modification of the standard pressure gauge involves performing operations that cannot be carried out in the field in the same installation where the electrical switchgear is located, which means longer waiting time until the electrical switchgear is put back into operation, as well as higher costs.

Therefore, it is concluded that medium and high voltage electrical distribution switchgear, especially the new generation of electrical switchgear free of sulfur hexafluoride(SF₆), needs to monitor the filling pressure throughout its useful life. Furthermore, in recent years, due to the rapid development in the field of electrical distribution, sensors are required to be miniaturized so that their physical footprint is as small as possible within the electrical switchgear, they are energy efficient and have a high measurement precision, always complying with the requirements of international regulations and power grid operators.

### DESCRIPTION OF THE INVENTION

The present invention relates to a system for monitoring the filling pressure of a fluid, such as a gas, for being used in electrical switchgear for the distribution of medium and high voltage electrical energy, and which is intended to solve each and every one of the problems mentioned above.

The fluid filling pressure monitoring system of the present invention is applicable to medium and high voltage electrical power distribution switchgear, such as, for example, a gas-insulated electrical switchgear, also known as a gas-insulated electrical cubicle. The system continuously and remotely monitors the filling pressure of a fluid, such as a gas, in at least one airtight sealed compartment of the electrical switchgear.

For this purpose, the system comprises a measurement unit for internal magnitudes in the airtight compartment and a processing unit for said internal magnitudes. The measurement unit located in the same electrical switchgear and the processing unit may be independent, in which case the processing unit is located separately from the electrical switchgear, for example in a remote centre, in the same electrical installation installed in another location, etc., with the data transmission between the measurement unit and the processing unit being wireless and bidirectional in either case, using data transmission and reception means, such as transistors and radio receivers, thus allowing remote viewing of the values obtained by the measurement unit, thereby avoiding all the disadvantages of a wired communication network and allowing data communication from the measurement unit to the processing unit and vice versa. Therefore, wireless data transmission between the measurement unit and the processing unit can be carried out via radio.

The measuring unit comprises a first pressure sensor, based on microelectromechanical systems (MEMS) technology, for the fluid contained in the airtight compartment of the electrical switchgear and a second temperature sensor for said compartment. Both the first pressure sensor and the second temperature sensor are integrated in a housing that is accessible from the outside of the electrical switchgear, since said housing is connected to the electrical switchgear through a connection point located on the outside of the electrical switchgear. At this same connection point, a third pressure sensor, such as a standard pressure gauge, can be connected via an adapter comprised by the monitoring system of the invention, so that both the measuring unit and a third pressure sensor can be arranged at a single connection point. If necessary, said adapter allows the connection of a measuring unit to an electrical switchgear already installed in the field (in operation) and equipped with a standard pressure sensor such as a pressure gauge, thus connecting both the measuring unit and the third pressure sensor at a single connection point of the electrical switchgear, without the need for another connection point and providing the electrical switchgear with a filling pressure monitoring system. Furthermore, by using a single connection point to connect several devices and not requiring additional connection points, the physical footprint is smaller in the electrical switchgear, thus meeting one of the requirements demanded by power grid operators.

The measuring unit can also be powered by a battery or it can be powered by a cable through a sealed connection that includes the measuring unit. In the case where the measuring unit is powered by a battery that is incorporated in the same housing together with the pressure and temperature sensors, the measuring unit can measure the charge of said battery so that when the battery is low it can be replaced by another as soon as possible. By integrating the measuring unit, which includes the pressure and temperature sensors, as well as the battery that powers the measuring unit, in a single housing, it is possible to reduce the space occupied by them in the electrical switchgear. On the other hand, by using the internal battery of the measuring unit to power the unit, energy consumption is reduced since the duration of the emergency batteries present in the installation for remote control, automation and communications is not affected by this new consumption of the measuring unit, thus achieving an energy-efficient pressure monitoring system.

The pressure monitoring system of the invention allows continuous monitoring of pressure and temperature over time, so that a historical data is available. The historical data can be stored in the processing unit of the monitoring system and/or in a server external to the monitoring system object of the present invention. The historical data obtained with the continuous monitoring of pressure and temperature can feed any health index of the electrical switchgear, also using these parameters to help in making long or short term decisions in the management of the maintenance of the electrical switchgear. From the maintenance point of view, having indicators of the health status of an electrical switchgear allows it to be evaluated and possible breakdowns or problems in its performance to be anticipated. Condition monitoring is the process by which variables indicating the operating status of a machine, in this case an electrical switchgear, are obtained on a continuous basis, such that a significant change may indicate a failure in its operation or a breakdown. Thus, it allows the scheduling of maintenance tasks or other actions required to take measures and to avoid the consequences of the failure, before the failure occurs. The main objective achieved with continuous monitoring is to improve performance capacity and make the process more profitable.

The processing unit for the measurements obtained by the measuring unit, such as the filling pressure of the gas contained in the airtight compartment of the electrical switchgear, the temperature as well as the charge of the internal battery of the measuring unit, allows the status of the electrical switchgear to be displayed at all times. The pressure value obtained by the measuring unit via the first pressure sensor is corrected in the processing unit based on the temperature measured by the second temperature sensor, i.e. equivalent pressures are calculated in the processing unit from pressure measurements and temperature measurements obtained by the measuring unit, since the pressure of a fixed volume of gas is directly proportional to its temperature. In this way, more precise pressure values are obtained which can indicate, for example, the change in the volume of gas contained in the airtight compartment of the electrical switchgear, which can indicate a leak or loss of gas from the airtight compartment.

### DESCRIPTION OF FIGURES

Figure 1.- Shows the system for monitoring the filling pressure of a gas for being used in electrical power distribution switchgear according to a first embodiment of the invention.
Figure 2.- Shows the system for monitoring the filling pressure of a gas for being used in electrical power distribution switchgear according to a second embodiment of the invention.
Figure 3.- Shows an elevation view of the measurement unit of the monitoring system according to the first or second embodiment.

### PREFERRED EMBODIMENT OF THE INVENTION

Several examples of preferred embodiments are described below with reference to the figures cited above, without limiting or reducing the scope of protection of the present invention.

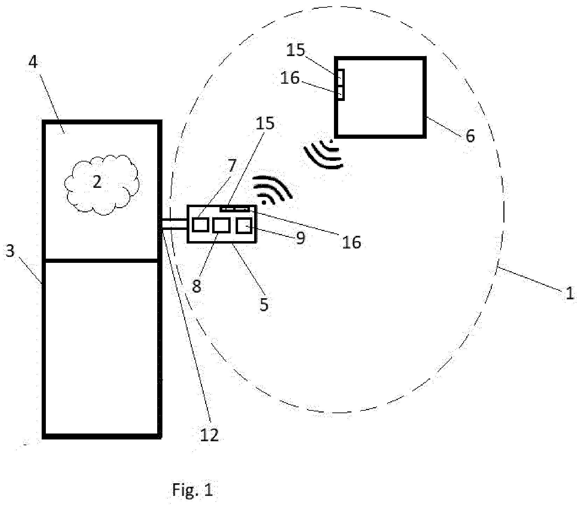

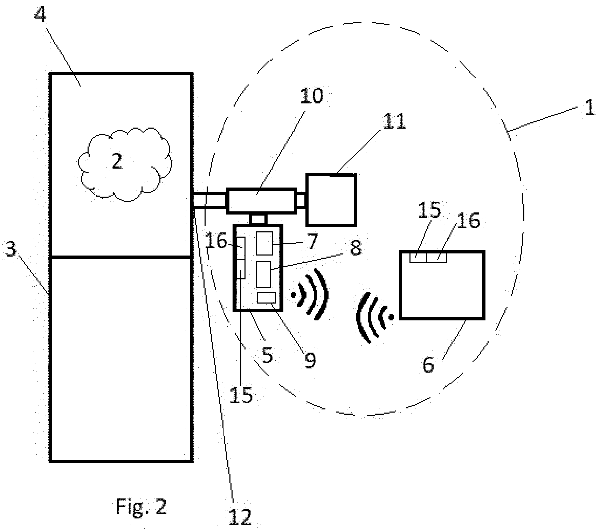

Figures 1 and 2 show two possible embodiments of a system (1) for monitoring the filling pressure of a fluid (2), such as a gas, for being used in an electrical switchgear (3), provided with at least one airtight and gas-insulated compartment (4), for the distribution of medium and high voltage electrical energy, such as, for example, gas-insulated electrical cubicles.

The pressure monitoring system (1) comprises a measurement unit (5) for parameters such as pressure and/or temperature, internal to the compartment (4) and a processing unit (6) for said parameters. Since the processing unit (6) is independent of the measurement unit (5) and the electrical switchgear (3), and said processing unit (6) may be located in a remote location, the communication or transmission of data between the measurement unit (5) located in the electrical switchgear (3) and the processing unit (6) is wireless and bidirectional, for which it comprises data transmission means (15) and reception means (16), allowing data communication from the measurement unit (5) to the processing unit (6) and vice versa. This wireless data communication is carried out via radio, which is done through radio waves or Hertzian waves.

The measuring unit (5), as can be seen in Figures 1 and 2, comprises a first sensor (7) for the pressure of the fluid (2), based on microelectromechanical systems (MEMS) technology, and a second sensor (8) for the temperature of the compartment (4). These pressure and temperature sensors (7, 8) are integrated in a housing (14). Furthermore, it has been provided that the measuring unit (5) can measure the charge of a battery (9) that supplies the same measuring unit (5) and that is also integrated in the housing (14).

As shown in Figure 2, according to a second possible embodiment of the invention, the pressure monitoring system (1) comprises an adapter (10) that allows the connection of a third pressure sensor (11), such as a standard pressure gauge, to the same connection point (12) of the electrical switchgear (3) where the measuring unit (5) is connected. This connection point (12) is located on the outside of the electrical switchgear (3), making it accessible so that any operator can access the measuring unit (5) and/or the third pressure sensor (11) to view the measurement of the latter or perform maintenance work on any of them, etc.

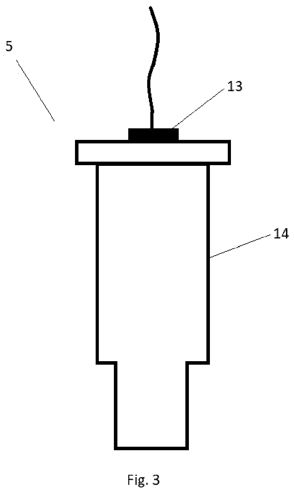

As shown in Figure 3, both in the first and second embodiment of the invention, the measuring unit (5) comprises a sealed cable power supply connection (13) in case said measuring unit (5) does not comprise the power supply battery (9) or the latter is out of service.

Using the system (1), continuous monitoring of pressure and temperature over time is carried out, so that a historical data is available. This historical data obtained with continuous monitoring of pressure and temperature can feed any health index of the electrical switchgear, using these parameters to help in making long- or short-term decisions in the management of the maintenance of the electrical switchgear.

As regards the processing unit (6), it is capable of calculating equivalent pressures from pressure measurements and temperature measurements obtained by the measuring unit (5). In the event that the measuring unit (5) is equipped with the battery (9) for its power supply, the processing unit (6) also manages the charging of said battery (9), indicating the remaining battery charge or remaining battery time. In this way, it is possible to view the status of the electrical switchgear (3) at all times. The pressure value obtained by the measuring unit (5) by means of the first pressure sensor (7) is corrected in the processing unit (6) based on the temperature measured by the second temperature sensor (8), so that equivalent pressure values of greater precision are obtained.

## Claims

1. System (1) for monitoring the filling pressure of a fluid (2), for being used in a medium and high voltage electrical power distribution switchgear (3), wherein the system (1) monitors the filling pressure of the fluid (2) contained in at least one airtight compartment (4) of the switchgear (3), the system (1) comprising a parameters measurement unit (5) internal to the compartment (4) and a processing unit (6) of said parameters, **characterized in that** the data transmission between the measurement unit (5) and the processing unit (6) is wireless and bidirectional, for which it comprises data transmission means (15) and reception means (16), and **in that** the measurement unit (5) comprises a first pressure sensor (7) of the fluid (2) and a second temperature sensor (8) of the compartment (4) integrated in a housing (14).

2. Monitoring system (1) according to claim 1, **characterized in that** the measuring unit (5) that is installed in the same electrical switchgear (3) and the processing unit are independent, the processing unit (6) being installed in another place separate from the electrical switchgear (3).

3. Monitoring system (1) according to claim 1 or 2, **characterized in that** the measuring unit (5) comprises a battery (9) which is integrated into the housing (14) and which supplies power to the same measuring unit (5), the charge of which is measured by the measuring unit (5).

4. Monitoring system (1) according to any of the preceding claims, **characterized in that** it comprises an adapter (10) that allows the connection of a third pressure sensor (11) at the same connection point (12) of the electrical switchgear (3) where the measurement unit (5) is connected.

5. Monitoring system (1) according to claim 4, **characterized in that** the connection point (12) is located on the outside of the electrical switchgear (3).

6. Monitoring system (1) according to any of the preceding claims, **characterized in that** the measuring unit (5) comprises a sealed cable power supply connection (13).

7. Monitoring system (1) according to any of the preceding claims, **characterized in that** the processing unit (6) is capable of calculating equivalent pressures from pressure measurements and temperature measurements obtained by the measuring unit (5).

8. Monitoring system (1) according to any of the preceding claims, **characterized in that** it allows continuous monitoring of the pressure and temperature over time, such that a data history is available.

9. Monitoring system (1) according to claim 1, **characterized in that** the wireless data transmission between the measuring unit (5) located in the electrical switchgear (3) and the processing unit (6) is carried out via radio.
